# FASCICULE DE BREVET EUROPEEN

(11) **EP 0 462 878 B1**
(45) Date de publication et mention de la délivrance du brevet: **17.05.1995**
(21) Numéro de dépôt: 91401607.6
(22) Date de dépôt: 17.06.1991
(51) Int. Cl.: B65G 35/06, B65G 47/26, B65G 17/00

(54) **Convoyeur à accumulation avec dispositif d'arrêt de navettes en zone de transition, et navettes et trains de navettes pour un tel convoyeur**
Stauförderer mit Arretiervorrichtung für Lastenträger am Übergangsbereich, Lastenträger und Lastenträgerzug für diese
Accumulation conveyor with stopping device for load carriers in transition area, load carriers and trains of load carriers therefor

(30) Priorité: 21.06.1990 FR 9007773
(43) Date de publication de la demande: 27.12.1991
(73) Titulaire: SOCIETE ANONYME DES USINES FARMAN, F-92310 SEVRES (FR)
(72) Inventeur: Wack, André, F-77580 Serbonne par Crécy-la-Chapelle (FR); Cosset, André, F-93460 Gournay Sur Marne (FR)
(74) Mandataire: CABINET BONNET-THIRION

(56) Documents cités:
- EP-A- 0 256 926
- EP-A- 0 337 891
- DE-A- 3 029 620
- DE-A- 3 124 898
- DE-A- 3 408 076
- GB-A- 2 201 644
- US-A- 4 793 261

## Description

La présente invention concerne un convoyeur à accumulation muni d'un dispositif d'arrêt de navettes en zone de transition. Plus particulièrement, un tel dispositif permet en arrêtant une navette selon une position et une inclinaison déterminées, de faciliter son chargement ou son déchargement. L'invention concerne également les navettes et trains de navettes pour un tel convoyeur.

Il est déjà connu de réaliser des convoyeurs munis de navettes destinées à apporter à un poste de travail déterminé, des fournitures nécessaires.

De tels convoyeurs se rencontrent couramment dans l'industrie automobile, par exemple, où un certain nombre de pièces sont amenées à un poste de travail, pour y être déchargées au fur-et-à-mesure de leur emploi. De manière à assurer une certaine autonomie à chaque poste de travail, on charge généralement plusieurs navettes successives puis on envoie ces navettes vers le poste de travail où elles s'accumulent avant d'être déchargées une par une.

Les convoyeurs de type connu, comportent donc une zone de chargement, une zone de transfert des navettes pleines, une zone de déchargement et une zone de retour des navettes vides vers la zone de chargement.

Lors du chargement des navettes, celles-ci sont stoppées dans une position, qui, pour des raisons de sécurité est relativement éloignée de l'extrémité du convoyeur. En effet lorsque les navettes se dirigent de la zone de retour à la zone de chargement, elles passent dans une zone dite de transition, ascendante ou descendante, située à chacune des extrémités du convoyeur. Pour éviter que le personnel effectuant le chargement soit blessé par le déplacement des navettes, on prévoit du côté des extrémités du convoyeur, des dispositifs de protection constitués par exemple par des grilles ou des barres.

Pour les mêmes raisons la zone de chargement est également choisie en dehors des extrémités du convoyeur.

Or, dans la majorité des cas les endroits adéquats pour charger un convoyeur se situent près des extrémités. De ce fait lorsque les pièces à charger sont lourdes ou volumineuses, la personne qui effectue le chargement, et qui se tient en arrière des grilles de protection, est vraiment très mal placée. On risque ainsi que les pièces soient mal chargées et tombent ou heurtent des objets sur leur chemin. En outre en obligeant le personnel à se pencher en avant au dessus du convoyeur, et ceci avec des objets lourds et/ou encombrants on augmente les risques d'accident. Lorsque le personnel est remplacé par un robot, il est également favorable de rapprocher à une extrémité du convoyeur la zone de chargement, car ceci permet de réduire les débattements.

Dans le but de rapprocher au maximum la zone de chargement et/ou de déchargement de l'extrémité du convoyeur, on cherche à pouvoir charger et/ou décharger alors que la navette est en zone de transition.

Or, sur les convoyeurs connus à ce jour, il est impossible d'arrêter une navette en zone de transition, car aucun mécanisme d'arrêt n'est prévu dans ces zones. En outre aucun mécanisme d'entraînement n'est prévu pour faire déplacer une navette chargée de la zone de transition vers la zone de transfert. Dans les zones de transition, les navettes sont en général entraînées positivement, d'où impossibilité d'arrêt dans ces zones.

Le but de la présente invention est de pallier l'ensemble de ces inconvénients en rapprochant le plus possible la zone de chargement ou de déchargement des extrémités du convoyeur.

On cherche donc à créer un dispositif permettant le chargement ou le déchargement des navettes dans la zone de transition ascendante ou descendante, c'est-à-dire à une extrémité même, du convoyeur sans pour cela arrêter le cheminement des navettes en zones horizontales. Un tel dispositif doit permettre l'arrêt et le maintien en position des navettes, dans la zone de transition. En outre on cherche à créer un dispositif facile à réaliser et à mettre en place en modifiant le moins possible les installations existantes.

A cet effet, la présente invention concerne un convoyeur à accumulation du type comportant une pluralité de navettes se déplaçant au moyen d'un moteur d'entraînement selon une trajectoire déterminée le long dudit convoyeur, ladite trajectoire présentant au moins une zone de transition ascendante et/ou descendante, caractérisé en ce qu'il comporte un dispositif d'arrêt de navettes en zone de transition, comprenant un élément denté engrenant avec une denture correspondante solidaire de la navette, ledit élément denté étant entraîné à l'état de repos, par un moteur auxiliaire tournant en synchronisme avec ledit moteur d'entraînement des navettes, et étant, à l'état actif, bloqué en rotation par un organe de détection et d'arrêt associé audit moteur auxiliaire, pour bloquer ladite navette en une position et suivant une inclinaison déterminées dans une zone de transition.

Grâce à ces dispositions on réalise un arrêt et un maintien en position d'une navette dans la zone de transition. Un chargement ou déchargement aisé de cette navette est ainsi réalisé. En outre on assure un entraînement efficace d'une navette chargée vers la zone de transfert.

Le fait que le chargement et/ou le déchargement de la navette puisse être réalisé dans cette zone de transition, augmente la sécurité du personnel et/ou des robots qui n'ont plus à effectuer des manoeuvres dans des conditions difficiles.

Un autre avantage de l'invention est le faible coût de réalisation et de mise en place de ce dispositif, et ceci même sur un convoyeur déjà existant.

En outre un tel dispositif d'arrêt peut être mis en place dans n'importe quelle zone de transition, qu'elle soit ascendante ou descendante.

Un autre avantage de l'invention est qu'il est possible, par réglage de l'organe de détection et d'arrêt, de définir l'angle d'inclinaison, par rapport à l'horizontal, de la navette lorsque celle-ci est arrêtée.

Un autre avantage de l'invention est que l'élément denté est amovible et peut très facilement être changé en cas d'usure.

Un aspect remarquable de l'invention consiste en la stabilité du maintien de la position de la navette arrêtée en zone de transition. Cette stabilité est attribuable en particulier à l'action combinée d'un moteur principal d'entraînement du convoyeur d'une part et, d'autre part, d'au moins un moteur auxiliaire associé au dispositif d'arrêt pour bloquer une navette en une position et suivant une inclinaison déterminée dans ladite zone de transition.

Cette conception du dispositif d'arrêt, décrit dans la demande de brevet français n° 90 04109 non publiée à ce jour, a conduit au développement constitué par la conception de trains de navettes.

Ainsi la présente invention couvre un convoyeur à accumulation du type comportant une pluralité de navettes se déplaçant au moyen d'un moteur d'entraînement selon une trajectoire déterminée présentant au moins une zone de transition ascendante et/ou descendante, ces navettes étant reliées entre elles de façon articulée par une barre d'attelage pour former un train de navettes.

Les navettes d'un tel convoyeur selon l'invention présentent sur leur face interne, une denture particulière appelée à engrener avec l'élément denté faisant partie du dispositif d'entraînement et d'arrêt du convoyeur, une particularité de l'engrenage ainsi constitué étant que la navette ne subit aucun mouvement de bascule et se trouve en quelque sorte en permanence "plaquée" contre le "chemin" délimitant sa trajectoire, que ce soit dans les zones ascendantes ou dans les zones descendantes des zones de transition de cette trajectoire. Cette stabilité est attribuable notamment à la conformation des dents de la denture portée par la face inférieure des navettes, d'une part, et des dents de l'élément denté venant en prise avec celles-ci, d'autre part. Selon une disposition avantageuse de l'invention l'élément denté est une couronne dentée flexible et amovible présentant une succession de dents régulièrement réparties sur toute sa périphérie, chacune de ces dents présentant deux plans inclinés dont l'angle au sommet, arrondi, est de 90°, tandis que la denture correspondante de la navette comporte au moins deux jeux de dents de forme et de dimensions différentes et réalisées de manière telle que seule la denture de l'un de ces jeux puisse venir s'emboîter dans un creux de la denture de l'élément denté (défini précédemment) en cours d'engrènement alors que la denture de l'autre jeu glisse de part et d'autre du sommet d'une dent dudit élément denté. Selon une forme préférée de réalisation la denture correspondante des navettes est constituée de deux paires de dents ménagées respectivement sur deux patins séparés solidaires de la face inférieure de chaque navette, chacune de ces paires de dents étant constituée d'une dent interne dite d'entraînement et d'une dent externe dite de positionnement, chaque dent d'entraînement étant de forme complémentaire à celle d'un des creux de l'élément denté ci-dessus défini et chaque dent de positionnement étant de forme globalement arrondie et de largeur moindre dans le sens périphérique que celle de la dent d'entraînement. Ainsi, lors de l'engrènement de la denture de la navette avec l'élément denté, seule la dent d'entraînement est en prise dans un des creux de l'élément denté.

Une telle réalisation de navettes permet de former des trains de navettes attelées les unes aux autres. Il suffit en effet de prévoir entre deux navettes au moins une barre d'attelage articulée sur le patin de queue d'une navette, d'une part, et sur le patin de tête de l'autre navette, d'autre part.

Selon une variante, les navettes d'un train de navettes sont attelées entre elles comme mentionné ci-dessus par une simple bielle d'attelage et les patins sont réunis entre eux par une pièce allongée dentée présentant deux profils de dentures, l'un correspondant à la fonction d'entraînement du côté du patin dit de tête et l'autre correspondant à la fonction de positionnement du côté du patin dit de queue.

Selon une autre variante les navettes destinées à former un train de navettes comportent chacune au moins un patin dit de tête avec sa denture correspondant à la fonction d'entraînement et au moins un patin dit de queue dont la denture correspondant à la fonction de positionnement est portée par une bielle d'attelage destinée à s'articuler, d'une part sur ledit patin de queue et, d'autre part sur le patin dit de queue de la navette suivante.

Suivant encore une autre variante deux navettes d'un train de navettes sont réunies entre elles par une navette dite intermédiaire dont les patins de tête et de queue ne comportent aucune denture et qui est destinée à être attelée d'une part au patin dit de queue de la navette dite de tête d'un train de navettes et d'autre part également au patin dit de queue de la navette suivante grâce à des bielles respectivement articulées sur lesdits patins et comportant sur leur longueur principalement des dentures correspondant à la fonction d'entraînement et, au voisinage des patins sur lesquels se font les articulations, des dentures correspondant à la fonction de positionnement.

D'autres objets, caractéristiques et avantages de la présente invention ressortiront d'ailleurs de la description qui va suivre donnée à titre d'exemple, en référence aux dessins annexés dans lesquels :
la figure 1 est une vue schématique en perspective d'un convoyeur à accumulation muni du dispositif d'arrêt selon l'invention ;
la figure 2 est une vue schématique en coupe selon la ligne II-II de la figure 1 avec arrachement partiel ;
la figure 3 est une vue en plan selon la flèche III de la figure 2 ;
la figure 4 est une vue schématique et agrandie du détail référencé IV à la figure 3 ;
la figure 5 est une vue schématique et agrandie du détail référencé V à la figure 2 ;
la figure 6 est une vue schématique en coupe montrant l'engrènement d'une denture de navette avec la denture de l'élément denté, ceci selon deux positions différentes (a,b) pour la denture de la navette, (détail référencé VI à la figure 5) ;
la figure 7 est une vue schématique en coupe d'un dispositif d'ancrage pour navettes et correspond au détail référencé VII à la figure 2 ;
la figure 8 est une vue schématique en plan selon la flèche VIII de la figure 7, d'un dispositif d'ancrage pour navettes ;
la figure 9 est une vue de profil représentant schématiquement un convoyeur avec un train de navettes selon une des variantes de réalisation dans deux positions le long de ce convoyeur ;
la figure 10 est une vue à plus grande échelle d'une partie du train de navettes de la figure 9 dans la zone de transition du convoyeur ;
la figure 11 est une vue schématique en plan montrant les principaux moyens d'engrènement du train de navettes sur le convoyeur de la figure 9 ;
les figures 12 et 13 sont des vues en élévation de variantes d'attelage d'un train de navettes selon l'invention;
la figure 14 est une vue correspondant à la variante de la figure 13 et dans la zone de transition du convoyeur ;
la figure 15 est une vue en élévation d'une autre variante de réalisation d'un train de navettes ;
la figure 16 est une vue correspondant à la variante de la figure 15 dans la zone de transition du convoyeur.

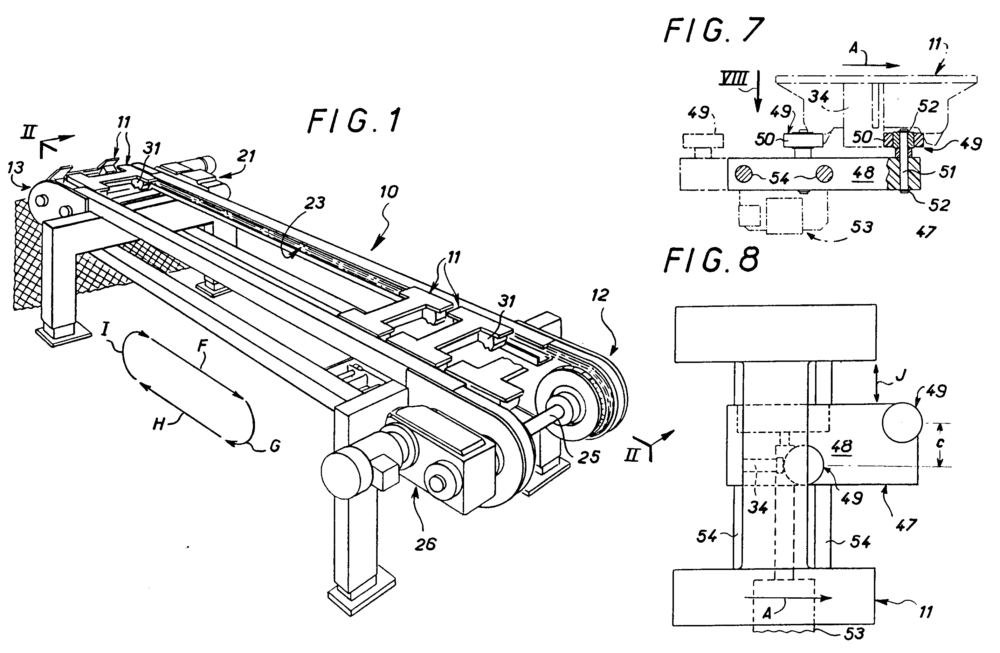

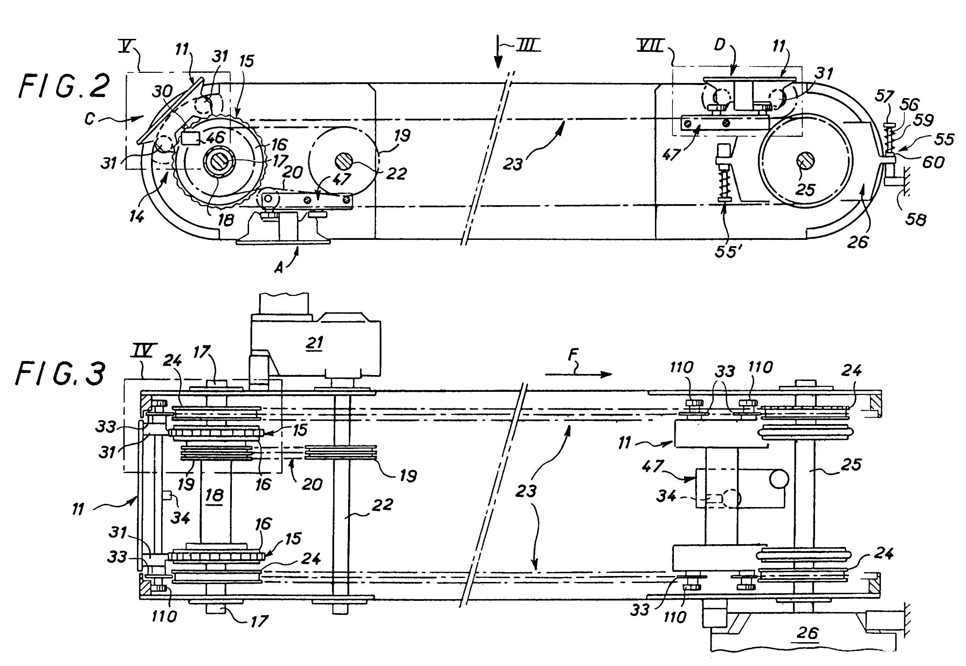

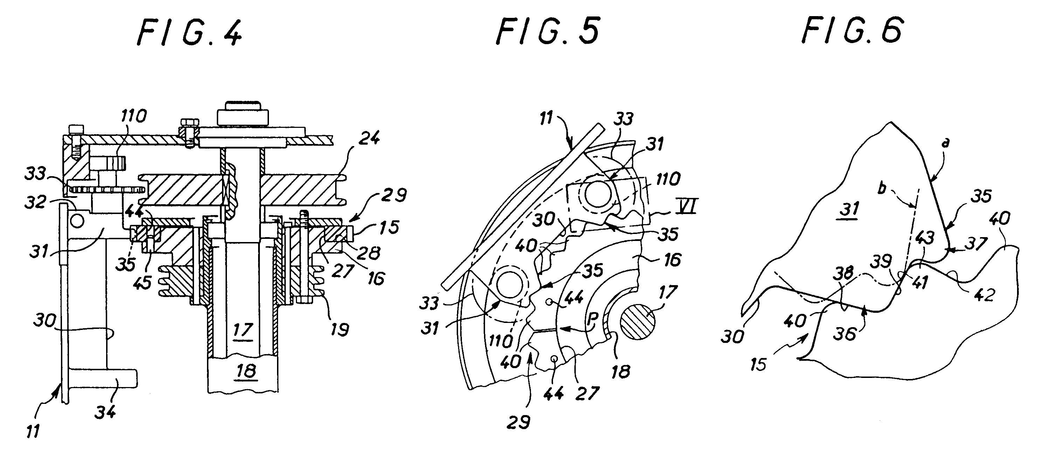

En se référant aux figures 1 à 8, un convoyeur 10, selon l'invention, comporte une pluralité de navettes 11 se déplaçant dans le sens de la flèche F (figure 1) à la partie supérieure du convoyeur en roulant sur des galets 110 (figure 3).

Ces navettes sont ensuite entraînées vers le bas (flèche G de la figure 1) dans une première zone de transition 12 dite descendante, puis se déplacent dans le sens de la flèche H à la partie inférieure du convoyeur pour remonter selon la flèche I dans une seconde zone de transition 13 dite ascendante.

Ce convoyeur est muni d'un dispositif d'arrêt 14 de navettes en zone de transition (figure 2).

Ce dispositif d'arrêt 14 selon l'invention (figures 2 à 4) est placé dans la zone de transition ascendante et comporte un élément denté 15, solidaire d'un support 16 lui-même libre en rotation par rapport à un arbre d'entraînement 17.

Par contre ce support 16, est solidaire d'un moyeu 18, entraîné en rotation par l'intermédiaire d'un système de roues dentées 19 et de chaîne 20 (figure 3), par un arbre auxiliaire 22 associé à un moteur auxiliaire 21.

L'arbre d'entraînement 17 est, quant à lui, entraîné en rotation au moyen de deux chaînes 23 associées à des roues dentées d'entraînement 24 solidaires d'un second arbre d'entraînement 25 associé à un moteur d'entraînement 26 situé à distance dudit arbre d'entraînement 17.

L'élément denté 15 (figure 2 à 6) est une couronne (figures 4 et 5) en matériau élastique de dureté Shore de préférence de 70 à 80. Cette couronne est coupée par une fente radiale P (figure 5).

La périphérie interne 27 de la couronne est adaptée à être reçue dans un épaulement 28 du support 16, tandis que la périphérie externe 29 de cette couronne présente une succession de dents 40 régulièrement réparties.

Comme cela est notamment visible aux figures 5 et 6, chacune de ces dents présente deux plans inclinés 41 et 42 qui se coupent en leur sommet à angle droit. Ce sommet 43 est arrondi pour éviter toute arête vive.

L'élément denté selon l'invention présente en outre deux ouvertures 44 (figure 5) de part et d'autre de la fente P. Ces ouvertures sont destinées à recevoir des ergots 45 solidaires du support 16. On réalise ainsi le maintien en position correcte et la fixation de l'élément denté 15 sur le support 16.

Comme cela est notamment visible aux figures 2, 4, 5 et 6, la navette 11 selon l'invention est munie sur sa face inférieure 30, de deux paires de patins 31. Chaque patin 31 porte sur sa face externe 32 un pignon d'entraînement 33 destiné à engrener avec la chaîne 23 associée aux roues dentées 24. La navette 11 est en outre munie d'une butée centrale 34 (nettement visible à la figure 4).

La navette 11 selon l'invention comporte en outre à la face inférieure de chacun de ses patins une denture 35. Cette denture (figures 5 et 6) est constituée par une paire de dents 36, 37. La dent la plus interne 36 est appelée dent d'entraînement et la dent la plus externe 37 est appelée dent de positionnement.

La dent d'entraînement 36 (figure 6) est constituée de deux plans inclinés 38, 39 qui se coupent selon un angle de 90°. Le sommet de jonction de ces deux plans est arrondi, de sorte à ne pas présenter d'arête vive.

La dent de positionnement 37 est de même hauteur que la dent d'entraînement 36 mais présente une forme globalement arrondie et ne possède pas, dans sa zone de travail, de portion plane. Elle est en outre de moindre largeur en sens périphérique.

Le dispositif d'arrêt 14 selon l'invention comporte en outre un organe de détection et d'arrêt 46 (représenté schématiquement à la figure 2). Cet organe détecte la présence d'une navette 11 dans la zone de transition ascendante 13 et donne un ordre d'arrêt au moteur auxiliaire 21.

Le convoyeur selon l'invention est également muni d'au moins un dispositif d'ancrage 47 des navettes (figures 2,3,7 et 8).

Sur la figure 2, deux dispositifs d'ancrage ont été représentés.

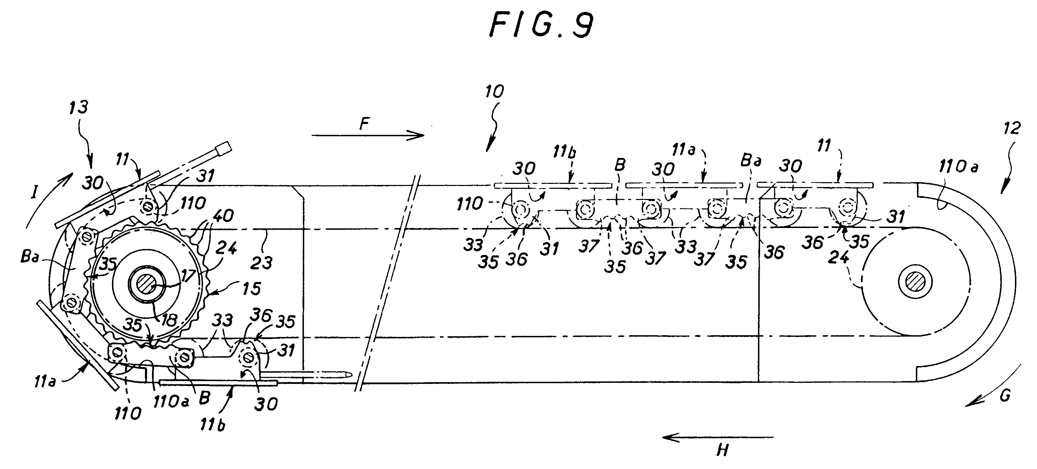

Comme cela est plus nettement visible aux figures 7 et 8, ce dispositif est constitué d'une plaque 48 sur la partie supérieure de laquelle sont fixées deux butées 49 en forme de galets.

Chacun de ces galets porte un anneau 50 en matière élastique absorbant les chocs, fixé à la plaque 48 à l'aide d'un axe 51 muni de circlips 52 à chacune de ses extrémités.

La plaque 48 est déplaçable selon le sens de la double flèche J (figure 8) grâce à un vérin 53 de course (c), un guidage étant assuré par les barres 54.

Le convoyeur selon la présente invention est en outre muni d'un dispositif limiteur de couple 55, 55′ associé au moteur d'entraînement 26 (figure 2).

Selon le sens de rotation du second arbre d'entraînement 25 un limiteur de couple 55 ou 55' agit pour arrêter la rotation du moteur d'entraînement 26 en cas de dépassement d'une valeur limite de couple. Ce limiteur de couple 55 ou 55′ est constitué d'un axe 56 dont une extrémité est filetée et reçoit un écrou 57, et dont l'autre extrémité est solidaire d'un bâti 58. Un ressort, ou autre moyen élastique 59 est mis en place sur l'axe 56 entre l'écrou 57 et un élément 60 coulissant sur l'axe 56 et sur lequel est fixé le moteur 26.

Un dispositif d'arrêt du moteur (non représenté) est associé à cet élément coulissant 60.

Le fonctionnement du dispositif d'arrêt selon l'invention, associé au convoyeur à accumulation ci-dessus décrit est explicité ci-après.

Lors de la mise en fonctionnement du convoyeur, les moteurs d'entraînement 26 et auxiliaire 21 sont mis en marche.

La mise en marche du moteur d'entraînement 26 (figure 3) provoque la rotation du second arbre d'entraînement 25, et donc la rotation des roues dentées 24 (aux deux extrémités du convoyeur) et l'entraînement des chaînes 23.

De ce fait, les pignons d'entraînement 33 des navettes sont entraînés et les navettes 11 se déplacent à la partie supérieure du convoyeur selon le sens de la flèche F. Si aucun autre mécanisme n'entrait en jeu, les navettes 11 se déplaceraient ainsi tout autour du convoyeur sans interruption.

Cependant les dispositifs d'ancrage 47 (figure 2) disposés en deux points du convoyeur à savoir, en zone de déchargement D et en zone d'attente de remplissage A, peuvent entrer en action. A titre explicatif on va décrire son fonctionnement en zone de déchargement D, ce fonctionnement étant semblable dans chacune des deux zones en question.

Comme montré aux figures 7 et 8, la navette 11 se déplace dans le sens de la flèche A grâce au moteur d'entraînement 26. Le dispositif d'ancrage est, quant à lui, placé comme indiqué à la figure 8, de sorte qu'une butée 49 se trouve en face de la butée centrale 34 de la navette. Lorsqu'il y a contact entre la butée centrale 34 de la navette et la butée 49 du système d'ancrage, la navette 11 est immobilisée dans une première position. Les chaînes 23 qui engrènent avec les pignons 33 de la navette entraînent alors ceux-ci en rotation autour de leur axe maintenant immobilisé, donc sans provoquer l'avancement de la navette.

Lorsque la navette est ainsi arrêtée dans une première position, elle est partiellement déchargée des pièces qu'elle porte. Sur décision de l'opérateur effectuant le déchargement (en appuyant sur un bouton, non représenté ou tout autre organe de commande), le vérin 53 est alors mis en action de sorte que la plaque 48 du dispositif d'ancrage soit ramenée dans le sens de la flèche J, d'une valeur égale à la course (c) du vérin 53. De ce fait on dégage la première butée 49 de la butée centrale 34 de la navette. La navette reprend alors sa progression dans le sens de la flèche A jusqu'à ce que la butée centrale 34 de la navette entre en contact avec la seconde butée 49 du dispositif d'ancrage, ce qui a pour effet d'immobiliser la navette 11 en une seconde position. Lors de cette seconde immobilisation de la navette, celle-ci peut être complètement déchargée des pièces qu'elle supporte. De la même manière que précédemment l'opérateur actionne un bouton (non représenté) ce qui provoque le déplacement de la plaque 48 du système d'ancrage dans le sens inverse de la flèche J et selon une valeur égale à la course (c) du vérin 53.

La seconde butée 49 est alors dégagée de la butée centrale 34 de la navette 11 ce qui libère celle-ci et lui permet d'être à nouveau entraînée par les chaînes 23 au long du convoyeur.

Le dispositif d'ancrage 47 est alors revenu dans sa position initiale et est en attente d'une prochaine navette à immobiliser.

On notera qu'un tel dispositif d'ancrage permet l'arrêt de chaque navette selon deux positions déterminées. Ceci aussi bien au niveau du poste de déchargement D, qu'en zone d'attente A.

On voit ainsi que non seulement les navettes 11 sont entraînées dans un mouvement cyclique tout le long du convoyeur, mais aussi qu'il est possible de les accumuler au niveau de chacun des postes de travail désiré (déchargement, attente...etc...).

La mise en route du moteur auxiliaire 21 selon l'invention, a pour conséquence (figure 3) la rotation de l'arbre auxiliaire 22. De ce fait les roues dentées 19 situées sur l'arbre auxiliaire 22 et sur le moyeu 18 sont entraînées en rotation par l'intermédiaire de la chaîne 20. La rotation du moyeu 18 entraîne la rotation du support 16 et de l'élément denté 15.

Il est à noter que la rotation de cet élément denté, se fait, en l'absence de demande spécifique, en synchronisme avec la rotation des roues dentées 24 sur l'arbre d'entraînement 17, lui-même mis en rotation par le moteur d'entraînement 26. Ainsi, en l'absence de toute autre commande les roues dentées 24 associées à l'arbre d'entraînement 17, et l'élément denté 15 tournent à une même vitesse, en synchronisme.

De ce fait, lorsque le dispositif d'ancrage 47 situé en zone d'attente A libère une navette 11 pour qu'elle pénètre en zone de transition ascendante, celle-ci est entraînée par les chaînes 23 et l'élément denté 15 (figs 5 et 6) qui engrène avec la denture 35 des patins de la navette, vers la zone de chargement.

Au moment de la rencontre de la denture 35 de la navette 11 et de l'élément denté 15, la dent de positionnement 37 de forme arrondie glisse sur la denture de l'élément denté de manière à ne jamais se présenter au niveau d'un sommet d'une dent de l'élément denté. En effet sa forme arrondie l'oblige lorsqu'il y a contact avec une partie de l'élément denté 15, à glisser d'un côté ou d'un autre d'un sommet de dent de l'élément denté sans jamais pouvoir s'arrêter et se positionner au niveau du sommet lui-même. Ainsi par glissement elle permet un positionnement toujours correct de la dent d'entraînement 36 de la denture du patin, dans un creux correspondant de la denture de l'élément denté 15. La forme de la dent d'entraînement 36 est en outre analogue au creux de la denture de l'élément denté 15, de sorte à assurer un meilleur contact et positionnement entre ces deux éléments. Lors de l'engrènement de la denture 35 et de l'élément denté 15, seule la dent d'entraînement 36 est en contact avec un creux de la denture de l'élément denté 15.

Un but principal de la présente invention est de permettre l'arrêt d'une navette 11 en zone de transition. A cet effet (fig. 2) l'organe de détection et d'arrêt 46 détecte la présence d'une navette en zone de transition, alors que cette navette est entraînée par l'élément denté 15. Lorsque la présence de la navette est détectée, l'organe de détection et d'arrêt 46, envoie un ordre d'arrêt au moteur auxiliaire 21. Le moment d'envoi de cet ordre d'arrêt est calculé pour qu'à l'arrêt du moteur auxiliaire 21, la navette se trouve selon une position et une inclinaison déterminées, dans la zone de transition ascendante.

Dans l'exemple représenté à la figure 2 la navette est arrêtée alors qu'elle aborde pratiquement le haut de la zone de transition, et qu'elle présente une inclinaison de l'ordre de 45°, par rapport à l'horizontale.

L'arrêt du moteur auxiliaire 21, qui est un moteur frein, provoque l'arrêt de la rotation de l'arbre auxiliaire 22 et par conséquent l'arrêt de la rotation de l'élément denté 15 en prise avec la denture 35 des patins 31 d'une navette 11. Le moteur d'entraînement 26, continue, quant à lui de fonctionner, et donc entraîne en rotation les chaînes 23 et les roues dentées 24 associées. Comme l'arbre d'entraînement 17 n'est pas solidaire des supports d'élément denté 15, ceux-ci sont arrêtés alors que les roues dentées 24 adjacentes continuent à être entraînées en rotation.

Les pignons d'entraînement 33 de la navette sont entraînés en rotation mais sans déplacer la navette 11 à laquelle sont fixés les axes qui les portent.

Lorsque la navette est ainsi en position arrêtée dans la zone de transition, il est facile et sans danger, pour un opérateur ou un robot de placer des pièces (mêmes lourdes ou volumineuses) sur la navette. Lorsque la navette est complètement chargée, l'opérateur appuie sur un bouton (non représenté) ou le robot reçoit un ordre de libération de la navette de sorte que le moteur auxiliaire 21 soit remis en fonctionnement en synchronisme avec le moteur d'entraînement 26. L'entraînement de la navette est repris par l'engrènement de la denture de la navette 35, avec la denture de l'élément denté 15, ce qui assure un entraînement efficace sans risque de blocage ou de patinage. De ce fait la navette en question est de nouveau entraînée par le convoyeur et sort de la zone de transition ascendante.

Les navettes pleines peuvent être ensuite accumulées au poste de déchargement D grâce au dispositif d'ancrage 47.

On notera que le dispositif d'arrêt de navette en zone de transition selon l'invention présente donc un état de repos dans lequel le moteur auxiliaire 21 tourne en synchronisme avec le moteur d'entraînement 26 et un état actif dans lequel le moteur auxiliaire 21 est arrêté.

Le convoyeur selon l'invention est en outre muni d'un limiteur de couple 55 ou 55′ qui lorsque le moteur d'entraînement voit son couple augmenter, fait déplacer l'élément coulissant 60, ce qui provoque, au delà d'un certain seuil, la coupure de l'alimentation du moteur d'entraînement 26, et arrête, de ce fait, le déplacement des navettes.

Lorsqu'après un certain temps d'utilisation l'élément denté 15 présente des signes d'usure, on procède au changement de cet élément 15. Pour ce faire l'élément denté 15 est détaché du support 16 sur lequel il est fixé, par désengagement des ergots 45 des ouvertures 44 pratiquées dans la couronne de l'élément 15. Par flexion il est retiré de son support 16 et un élément denté 15 neuf est mis en place en effectuant le travail inverse. Il est à noter l'extrème simplicité et rapidité de mise en place ou d'enlèvement de l'élément denté 15, ce qui est un élément très important pour une maintenance aisée du convoyeur selon l'invention.

Il est à noter que dans un but de clarté de la description, il a été décrit un dispositif d'arrêt de navette en zone de transition ascendante. Il va sans dire qu'un tel dispositif peut également être mis en place en zone de transition descendante.

Un même convoyeur peut en outre être muni de deux dispositifs d'arrêt de navettes, un en zone de transition ascendante et un en zone de transition descendante.

Dans ce cas il peut être mis en place un ou deux moteurs auxiliaires.

Dans le cas où il y a un seul moteur auxiliaire, un ensemble de roues dentées et de courroies permet la mise en rotation d'éléments dentés 15 à chaque extrémité du convoyeur.

En variante le dispositif d'ancrage est agencé pour permettre l'arrêt de chaque navette en trois positions déterminées au lieu de deux.

A cet effet, une troisième butée 49 (en pointillé à la figure 7) est rajoutée. On conçoit que s'il était nécessaire de faire stopper chaque navette selon n positions déterminées, il suffirait de munir le dispositif d'ancrage de n butées correspondantes. Chacune de ces butées serait alors mise en quinconce soit dans l'alignement de la première butée, soit dans l'alignement de la seconde. Le vérin 53 effectuerait alors des mouvements de va-et-vient selon la course (c) dans la direction de la flèche J.

Il est à noter que l'angle d'inclinaison des navettes 11, lorsqu'elles sont arrêtées en zone de transition, peut être différent de 45°. Cet angle se règle à l'aide du dispositif de détection de navette 46 et peut donc être modifié selon le type de pièces à charger à la demande de l'utilisateur.

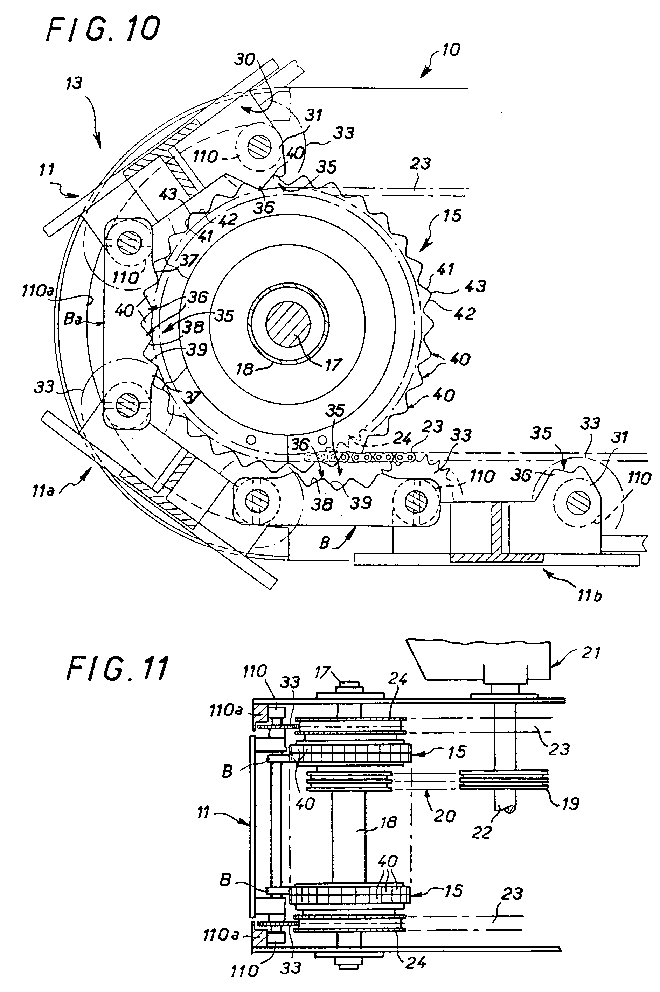

On se référera maintenant aux figures 9 à 16 qui illustrent la possibilité de réaliser des trains de navettes. Pour un souci de simplification des dessins le moteur d'entraînement (26), le ou les moteurs auxiliaires (21) ainsi que les dispositifs d'arrêt, d'ancrage et de limiteur de couple (47,55) dont il a été question ci-dessus, n'ont pas été représentés ou n'ont été représentés que partiellement comme c'est le cas pour le moteur 21 à la figure 11.

Comme déjà indiqué précédemment chaque navette 11 est munie sur sa face inférieure 30 d'au moins une paire de patins 31. Chacun de ces patins porte sur sa face externe le pignon d'entraînement 33 destiné à engrener avec la chaîne 23 associée aux roues dentées 24. En outre et de façon générale, chaque navette comporte, à la face inférieure des patins dont elle est munie, une denture 35. Cette denture est constituée comme décrit ci-dessus par des dents du type dit d'entraînement telles que les dents 36 et par des dents du type dit de positionnement telles que les dents 37 (figures 9, 10, 12 et 13).

Les dents du type dit d'entraînement 36 sont constituées de deux plans inclinés 38, 39 qui se coupent selon un angle de 90°. Le sommet de jonction de ces deux plans est arrondi pour ne pas présenter d'arête vive.

Les dents du type dit de positionnement 37 sont de même hauteur que les dents de type dit d'entraînement 36 mais elles présentent une forme globalement arrondie et elles ne possèdent pas, dans leur zone de travail, de portion plane. Elles sont en outre de moindre largeur dans le sens périphérique.

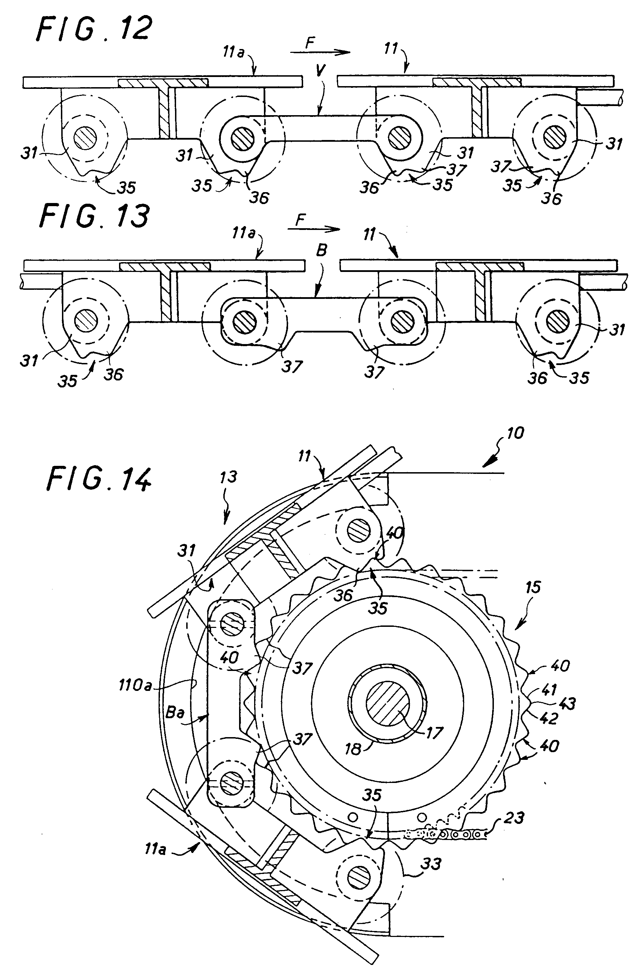

Avec de telles navettes, on peut selon l'invention réaliser des trains de navettes avec un attelage très simple lequel, selon un mode de réalisation peut être celui illustré à la figure 12.

Selon ce mode de réalisation, deux navettes 11-11a sont simplement reliées entre elles par une bielle V qui s'articule d'une part sur le patin de queue de l'une de ces navettes et d'autre part sur le patin de tête de la navette suivante (en prenant la flèche F comme sens d'avance des navettes sur le convoyeur schématisé à la figure 9).

Comme on peut le constater lors de la progression d'un train de navettes dans la zone, par exemple ascendante H-I du convoyeur 10, les dents d'entraînement 36 de la navette 11 de tête de la figure 12 engrènent avec l'élément denté 15, puis l'avance se poursuivant ce seront les dents 37 de positionnement, qui engrèneront avec ledit élément denté, elles-mêmes suivies des dents d'entraînement 36 de la navette suivante (11a) tractée par la bielle V dont la longueur sera calculée de façon que l'ensemble suive en permanence le contour dudit élément 15 sans "basculement". On conçoit en effet que si cette longueur était mal calculée il pourrait se produire un phénomène de grippage ou tout simplement des phénomènes d'usures exagérées dûs à des angles d'attaque inappropriés entre le patin d'une navette et l'élément denté 15. On fera remarquer qu'aussi bien dans cette forme de réalisation que dans celles qui vont suivre, la bielle d'attelage peut être constituée par une simple barre ou par un volet articulé entre les navettes, barre ou volet pouvant lui-même comporter des dentures du type 36 ou 37 dont sont munis les patins et susceptibles de venir en prise suivant le même mode de coopération avec l'élément denté 15 (voir figures 13-14). On conçoit que lorsque la bielle d'attelage est du type volet ce dernier s'étend sur toute la largeur des navettes ; la bande de roulement de l'élément denté 15 qui est appelée à venir en prise avec cette bielle d'attelage aura alors une largeur correspondante et l'élément denté 15 pourra être un tambour.

Ainsi suivant le mode de réalisation illustré à la figure 13, la bielle B comporte à ses deux extrémités des dents de positionnement 37 remplaçant celles du patin de queue d'une navette.

Autrement dit deux navettes sont reliées par une bielle comportant à ses deux extrémités des dents de positionnement 37 et l'attelage se fait entre des navettes inversées c'est-à-dire entre les parties dites normalement de queue de chaque navette.

Suivant une autre forme de réalisation (voir fig 9, 10, 14) on peut constituer un attelage de la façon suivante :
On se sert d'une bielle d'attelage Ba comportant sa denture d'entraînement du type 36 pour relier une navette dite de tête 11 avec son patin 31 à denture d'entraînement 36 à une navette intermédiaire 11a dont les patins dits de tête et de queue sont remplacés d'une part par des dentures correspondant à la fonction de positionnement réalisées sur la portion terminale de la bielle de liaison Ba qui se trouve entre la navette 11 et ladite navette intermédiaire 11a et, d'autre part, par des dentures correspondant à la fonction de positionnement réalisées sur la portion terminale de la bielle de liaison B qui se trouve entre ladite navette intermédiaire 11a et la navette 11b suivante (Fig 9). On constitue ainsi un train de navettes le plus simple à réaliser. La dernière navette 11b comporte elle-même, comme la navette 11, son seul jeu de patins 31, ici en position de queue, avec sa denture 35 comportant des dents d'entraînement 36.

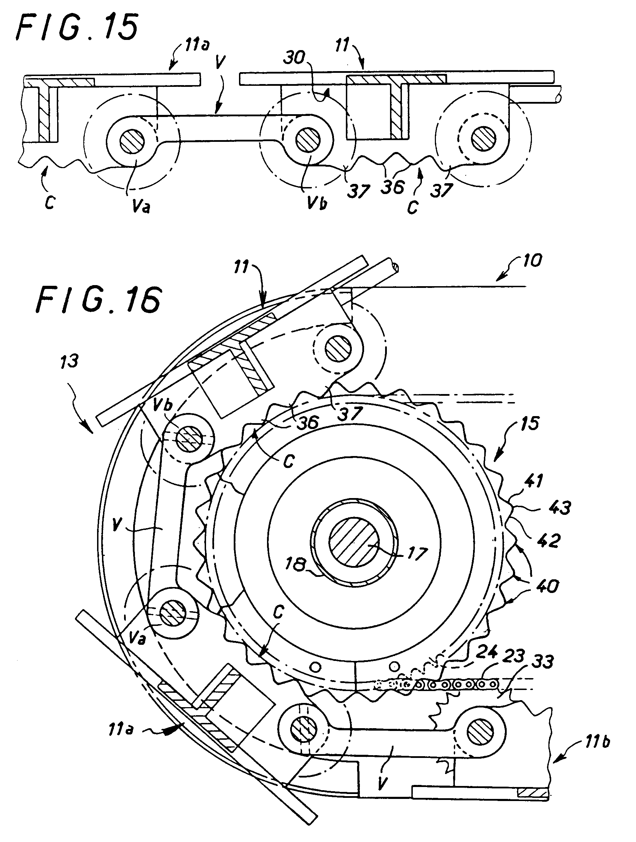

Suivant une autre forme de réalisation possible, illustrée aux figures 15 et 16, les patins de tête et de queue de chaque navette 11 sont réunis par une portion dentée C dont les dents 36 ont la forme correspondant à la fonction d'entraînement, les extrémités de cette portion dentée présentant un profil 37 correspondant à celui de la fonction de positionnement. L'attelage entre deux navettes se fait alors par une simple bielle ou simple volet V articulé à ses deux extrémités Va et Vb sur chaque navette.

En se référant à la figure 16 on voit nettement que chaque navette d'un train de navettes se trouve suivre parfaitement le mouvement de l'élément denté 15 sans risque de désaccouplement inopiné des pièces en prise.

Il va de soi que la présente invention n'a été décrite qu'à titre purement explicatif et nullement limitatif et que toute modification utile pourra y être apportée sans sortir de son cadre.

Bien entendu les trains de navettes selon l'invention peuvent être commandés dans leur déplacement par tout dispositif appropriée de commande et d'arrêt.

## Revendications

1. Convoyeur à accumulation du type comportant une pluralité de navettes (11) se déplaçant au moyen d'un moteur d'entraînement (26) selon une trajectoire déterminée (F, G, H, I) le long dudit convoyeur, ladite trajectoire présentant au moins une zone de transition ascendante (I) et/ou descendante (G), caractérisé en ce qu'il comporte un dispositif d'arrêt de navettes en zone de transition comprenant un élément denté (15) engrenant avec une denture correspondante (35) solidaire de la navette (11), ledit élément denté (15) étant entraîné à l'état de repos, par un moteur auxiliaire (21) tournant en synchronisme avec ledit moteur d'entraînement (26) des navettes, et étant, à l'état actif, bloqué en rotation par un organe de détection et d'arrêt (46) associé audit moteur auxiliaire (21), de sorte à bloquer ladite navette (11) selon une position et une inclinaison déterminées dans une zone de transition (I, G).

2. Convoyeur avec dispositif d'arrêt selon la revendication 1, caractérisé en ce que ledit élément denté (15) est une couronne flexible et amovible.

3. Convoyeur avec dispositif d'arrêt selon la revendication 2, caractérisé en ce que ledit élément denté (15) présente une succession de dents (40) régulièrement réparties sur toute sa périphérie, chacune des dents présentant deux plans inclinés (41,42) dont l'angle au sommet est de 90°.

4. Convoyeur avec dispositif d'arrêt selon la revendication 1 ou 2, caractérisé en ce que ledit élément denté (15) comporte un moyen de fixation pour sa mise en place sur un support (16) entraîné en rotation par ledit moteur auxiliaire (21).

5. Convoyeur avec dispositif d'arrêt selon la revendication 4, caractérisé en ce que ledit moyen de fixation est une paire d'ouvertures (44) destinées à recevoir chacune un ergot (45) correspondant, solidaire dudit support (16).

6. Convoyeur avec dispositif d'arrêt selon l'une quelconque des revendications précédentes, caractérisé en ce que ledit élément denté (15) est coupé par une fente radiale (P).

7. Convoyeur avec dispositif d'arrêt selon l'une quelconque des revendications précédentes, caractérisé en ce que ledit élément denté (15) est réalisé en matière plastique flexible.

8. Convoyeur avec dispositif d'arrêt selon la revendication 1, caractérisé en ce que ladite denture (35) correspondante de la navette est constituée de deux paires de dents (36,37), ménagées respectivement sur deux patins (31) séparés, solidaires de la face interne (30) de la navette (11).

9. Convoyeur avec dispositif d'arrêt selon la revendication 8, caractérisé en ce que chaque paire de dents est constituée d'une dent interne dite d'entraînement (36), et d'une dent externe dite de positionnement (37).

10. Convoyeur avec dispositif d'arrêt selon la revendication 8 ou 9, caractérisé en ce que la dent d'entraînement (36) est de forme complémentaire à celle d'un des creux de l'élément denté (15).

11. Convoyeur avec dispositif d'arrêt selon la revendication 8 ou 9, caractérisé en ce que la dent de positionnement (37) est de forme globalement arrondie et de largeur moindre dans le sens périphérique que la dent d'entraînement (36).

12. Convoyeur avec dispositif d'arrêt selon l'une des revendications 8 ou 9, caractérisé en ce que lors de l'engrènement de la denture (35) de la navette (11) avec l'élément denté (15) seule la dent d'entraînement (36) est en contact avec un des creux de l'élément denté (15).

13. Convoyeur avec dispositif d'arrêt selon la revendication 1, caractérisé en ce que ledit organe de détection et d'arrêt (46) détecte la présence d'une navette (11) en zone de transition, et transmet un ordre d'arrêt au moteur auxiliaire (21), de sorte à bloquer la rotation de l'élément denté (15) et de la navette (11) avec laquelle il engrène dans une position déterminée en zone de transition.

14. Convoyeur avec dispositif d'arrêt selon la revendication 1, caractérisé en ce qu'il comporte en outre un organe de libération de la navette agissant sur le moteur auxiliaire (21) de sorte à en autoriser la rotation en synchronisme avec le moteur d'entraînement (26).

15. Convoyeur à accumulation du type comportant un dispositif d'arrêt selon l'une quelconque des revendications 1 à 14, caractérisé en ce qu'il comporte en combinaison avec ledit dispositif d'arrêt, une pluralité de navettes (11) se déplaçant au moyen d'un moteur d'entraînement (26) selon une trajectoire déterminée le long dudit convoyeur, ladite trajectoire présentant au moins une zone de transition ascendante et/ou descendante, au moins un dispositif d'ancrage (47) et au moins un limiteur de couple (55,55').

16. Navette pour convoyeur à accumulation conçue pour se déplacer au moyen d'un moteur d'entraînement (26) selon une trajectoire déterminée le long dudit convoyeur, ladite trajectoire présentant au moins une zone de transition ascendante et/ou descendante, caractérisée en ce qu'elle comporte, portée par sa face inférieure (30) une denture (35) adaptée à s'engrener avec un élément denté (15) destiné à commander l'arrêt desdites navettes, ledit élément denté (15) présentant une succession de dents (40) régulièrement réparties sur toute sa périphérie, chacune de ces dents présentant deux plans inclinés (41,42) dont l'angle au sommet arrondi est de 90°, ladite denture (35) comportant au moins deux jeux de dents de forme et de dimensions différentes et réalisées de manière telle que seule la denture de l'un de ces jeux (36) puisse venir au contact avec un creux de la denture dudit élément denté (15) en cours d'engrènement alors que la denture de l'autre jeu (37) glisse de part et d'autre du sommet d'une dent dudit élément (15).

17. Navette selon la revendication 16, caractérisée en ce que ladite denture (35) est réalisée selon l'une quelconque des revendications 8 à 12.

18. Train de navettes selon la revendication 16 ou 17, caractérisé en ce que les navettes sont reliées entre elles de façon articulée par une barre d'attelage.

19. Train de navettes selon la revendication 18, caractérisé en ce que ladite denture (35) comporte au moins deux jeux de dents de forme et de dimensions différentes et réalisées de manière telle que seule les dents de l'un de ces jeux (36) dites dents d'entraînement puissent venir s'emboîter dans un creux de la denture dudit élément denté (15) en cours d'engrènement alors que les dents de l'autre jeu (37) dites dents de positionnement glissent de part et d'autre du sommet d'une dent dudit élément (15).

20. Train de navettes selon la revendication 19 ou 20, caractérisé en ce que les navettes comportent chacune au moins une paire de patins (31) dits de tête et au moins une paire de patins (31) dits de queue, au moins une paire desdites paires de patins portant des dents correspondant au moins à la fonction dite d'entraînement.

21. Train de navettes selon la revendication 20, caractérisé en ce que ladite paire de patins de tête et ladite paire de patins de queue sont, suivant une variante, réunies entre elles par une pièce (C) présentant principalement une denture correspondant au profil des dents d'entraînement (36) à partir desdits patins de tête et une denture correspondant au profil des dents de positionnement (37) au voisinage desdits patins de queue.

22. Train de navettes selon la revendication 20, caractérisé en ce que, chacune des navettes comporte au moins une paire de patins dits de tête avec sa denture (36) correspondant à la fonction d'entraînement et au moins une paire de patins dits de queue dont la denture (37) correspondant à la fonction de positionnement est portée par une bielle d'attelage (B) articulée d'une part sur l'un desdits patins de queue d'une navette et d'autre part sur le patin de tête correspondant de la navette suivante constituant ledit train de navettes.

23. Train de navettes selon la revendication 20, caractérisé en ce que, deux navettes sont réunies entre elles par l'intermédiaire d'une navette (11a) dite intermédiaire dont les patins de tête et de queue ne comportent aucune denture mais servent de points d'articulation à des bielles (B-Ba) de liaison entre les navettes de tête et de queue auxquelles ladite navette intermédiaire est reliée, bielles comportant sur leur longueur principalement des dents (36) dites d'entraînement et au voisinage desdits points d'articulation, des dents (37) dites de positionnement.

## Claims

1. An accumulation conveyor of the type comprising a plurality of shuttle members (11) which are displaced by means of a drive motor (26) along a given path (F, G, H, I) along said conveyor, said path having at least one ascending (I) and/or descending (G) transition zone, characterised in that it includes a device for stopping shuttle members in the transition zone comprising a toothed element (15) engaging with a corresponding tooth means (35) which is fixed with respect to the shuttle member (11), said toothed element (15) being driven in the rest state by an auxiliary motor (21) rotating in synchronous relationship with said motor (26) for driving the shuttle members and in the active state being prevented from rotating by a detection and stopping member (46) associated with said auxiliary motor (21) in such a way as to block said shuttle member (11) in a given position and inclination in a transition zone (I, G).

2. A conveyor with a stopping device according to claim 1 characterised in that said toothed element (15) is a flexible removable ring.

3. A conveyor with a stopping device according to claim 2 characterised in that said toothed element (15) has a succession of teeth (40) which are regularly distributed over its entire periphery, each of the teeth having two inclined surfaces (41, 42) whose angle at the apex is 90°.

4. A conveyor with a stopping device according to claim 1 or claim 2 characterised in that said toothed element (15) comprises a fixing means for positioning it on a support (16) which is driven in rotation by said auxiliary motor (21).

5. A conveyor with a stopping device according to claim 4 characterised in that said fixing means is a pair of openings (44) which are each intended to receive a corresponding lug (45) which is fixed with respect to said support (16).

6. A conveyor with a stopping device according to any one of the preceding claims characterised in that said toothed element (15) is cut by a radial slot (P).

7. A conveyor with a stopping device according to any one of the preceding claims characterised in that said toothed element (15) is made of flexible plastics material.

8. A conveyor with a stopping device according to claim 1 characterised in that said corresponding tooth means (35) of the shuttle member is formed by two pairs of teeth (36, 37) which are respectively provided on two separate flanges (31) which are fixed with respect to the internal face (30) of the shuttle member (11).

9. A conveyor with a stopping device according to claim 8 characterised in that each pair of teeth is formed by an internal tooth (36) referred to as the drive tooth and an external tooth (37) referred to as the positioning tooth.

10. A conveyor with a stopping device according to claim 8 or claim 9 characterised in that the drive tooth (36) is of a shape complementary to one of the hollow portions of the toothed element (15).

11. A conveyor with a stopping device according to claim 8 or claim 9 characterised in that the positioning tooth (37) is of generally rounded shape and of a width which is less in the peripheral direction than the drive tooth (36).

12. A conveyor with a stopping device according to one of claims 8 and 9 characterised in that when the tooth means (35) of the shuttle member (11) engages with the toothed element (15) only the drive tooth (36) is in contact with one of the hollow portions of the toothed element (15).

13. A conveyor with a stopping device according to claim 1 characterised in that said detection and stopping member (46) detects the presence of a shuttle member (11) in the transition zone and transmits a stop command to the auxiliary motor (21) so as to stop the rotary movement of the toothed element (15) and the shuttle member (11) with which it engages in a given position in the transition zone.

14. A conveyor with a stopping device according to claim 1 characterised in that it further comprises a member for freeing the shuttle member which acts on the auxiliary motor (21) so as to permit rotation thereof in synchronous relationship with the drive motor (26).

15. An accumulation conveyor of the type including a stopping device according to any one of claims 1 to 14 characterised in that it comprises in combination with said stopping device a plurality of shuttle members (11) which are displaced by means of a drive motor (26) along a given path along said conveyor, said path having at least one ascending and/or descending transition zone, at least one anchoring device (47) and at least one torque limiter (55, 55').

16. A shuttle member for an accumulation conveyor, the shuttle member being designed to be displaced by means of a drive motor (26) along a given path along said conveyor, said path having at least one ascending and/or descending transition zone, characterised in that it comprises, carried by its lower face (30), a tooth means (35) which is adapted to engage with a toothed element (15) intended to control stopping of said shuttle members, said toothed element (15) having a succession of teeth (40) which are regularly distributed over its entire periphery, each of said teeth having two inclined surfaces (41, 42) whose angle at the rounded apex is 90°, said tooth means (35) comprising at least two sets of teeth of different shapes and dimensions and designed in such a way that only the tooth means of one of said sets (36) can come into contact with a hollow portion of the tooth means of said toothed element (15) in the course of engagement while the tooth means of the other set (37) slides on respective sides of the apex of a tooth of said element (15).

17. A shuttle member according to claim 16 characterised in that said tooth means (35) is designed in accordance with any one of claims 8 to 12.

18. A train of shuttle members according to claim 16 or claim 17 characterised in that the shuttle members are connected together pivotably by a coupling bar.

19. A train of shuttle members according to claim 18 characterised in that said tooth means (35) comprises at least two sets of teeth of different shapes and dimensions and designed in such a way that only the teeth of one of said sets (36) forming drive teeth can come to fit into a hollow portion of the tooth means of said toothed element (15) in the course of engagement while the teeth of the other set (37) forming positioning teeth slide on respective sides of the apex of a tooth of said element (15).

20. A train of shuttle members according to claim 18 or claim 19 characterised in that the shuttle members each comprise at least one pair of flanges (31) referred to as head flanges and at least one pair of flanges (31) referred to as tail flanges, at least one pair of said pairs of flanges bearing teeth corresponding at least to the function referred to as the drive function.

21. A train of shuttle members according to claim 20 characterised in that said pair of head flanges and said pair of tail flanges are in an alternative configuration connected together by a portion (C) which mainly has a tooth means corresponding to the profile of the drive teeth (36), from said head flanges, and a tooth means corresponding to the profile of the positioning teeth (37) in the vicinity of said tail flanges.

22. A train of shuttle members according to claim 20 characterised in that each of the shuttle members comprises at least one pair of flanges referred to as head flanges with its tooth means (36) corresponding to the drive function and at least one pair of flanges referred to as tail flanges of which the tooth means (37) corresponding to the positioning function is carried by a coupling link (B) pivotably connected on the one hand to one of said tail flanges of a shuttle member and on the other hand to the corresponding head flange of the following shuttle member constituting said train of shuttle members.

23. A train of shuttle members according to claim 20 characterised in that two shuttle members are connected together by way of a shuttle member (11a) which is referred to as an intermediate shuttle member and of which the head and tail flanges do not comprise any tooth means but serve as pivotal mounting points for links (B-Ba) for making a connection between the head and tail shuttle member to which said intermediate shuttle member is connected, the links comprising over their length mainly teeth (36) referred to as drive teeth and in the vicinity of said pivotal mounting points teeth (37) referred to as positioning teeth.

## Patentansprüche

1. Stauförderer der Art mit einer Mehrzahl von Lastenträgern (11), die mittels eines Antriebsmotors (26) entlang einer bestimmten Bahn (F, G, H, I) entlang des Förderers bewegbar sind, wobei die Bahn wenigstens einen ansteigenden (I) und / oder abfallenden (G) Übergangsbereich aufweist,
dadurch **gekennzeichnet,**
daß er eine Arretiervorrichtung für Lastenträger im Übergangsbereich mit einem verzahnten Element (15), das mit einer entsprechenden, an dem Lastenträger (11) vorgesehenen, Verzahnung in Eingriff steht, aufweist, wobei das verzahnte Element (15) im Ruhezustand durch einen Hilfsmotor (21) angetrieben wird, der in Synchronisation mit dem Antriebsmotor (26) der Lastenträger dreht und im aktiven Zustand durch ein Erfassungs- und Arretierorgan (46), das dem Hilfsmotor (21) zugeordnet ist, in der Drehbewegung blockiert wird, so daß der Lastenträger (11) in einer bestimmten Position und mit einer bestimmten Neigung in einem Übergangsbereich (I, G) blockiert wird.

2. Förderer mit einer Arretiervorrichtung nach dem Anspruch 1,
dadurch **gekennzeichnet,**
daß das verzahnte Element (15) ein flexibler und unbeweglicher Kranz ist.

3. Förderer mit einer Arretiervorrichtung nach dem Anspruch 2,
dadurch **gekennzeichnet,**
daß das verzahnte Element (15) eine Folge von regelmäßig an seinem gesamten Umfang verteilten Zähnen (40) aufweist, wobei jeder der Zähne zwei geneigte Flächen (41, 42) aufweist, deren Spitzenwinkel 90° beträgt.

4. Förderer mit einer Arretiervorrichtung nach dem Anspruch 1 oder 2,
dadurch **gekennzeichnet,**
daß das verzahnte Element (15) ein Befestigungsmittel zur Anordnung auf einem Träger (16), der drehbar durch den Hilfsmotor (21) angetrieben ist, umfaßt.

5. Förderer mit einer Arretiervorrichtung nach dem Anspruch 4,
dadurch **gekennzeichnet,**
daß das Befestigungsmittel ein Paar von Öffnungen (44) ist, die jeweils einen entsprechenden, an dem Träger (16) vorgesehenen Vorsprung (45) aufnehmen können.

6. Förderer mit einer Arretiervorrichtung nach irgendeinem der vorhergehenden Ansprüche,
dadurch **gekennzeichnet,**
daß das verzahnte Element durch einen Radialschlitz (P) durchschnitten ist.

7. Förderer mit einer Arretiervorrichtung nach einem der vorhergehenden Ansprüche,
dadurch **gekennzeichnet,**
daß das verzahnte Element (15) aus einem flexiblen Kunststoffmaterial gebildet ist.

8. Förderer mit einer Arretiervorrichtung nach dem Anspruch 1,
dadurch **gekennzeichnet,**
daß die entsprechende Verzahnung (35) des Lastenträgers durch zwei Paare von Zähnen (36, 37) gebildet ist, die jeweils an zwei getrennten Schuhen (31) an der Innenfläche (30) des Lastenträgers (11) vorgesehen sind.

9. Förderer mit einer Arretiervorrichtung nach dem Anspruch 8,
dadurch **gekennzeichnet,**
daß jedes Paar von Zähnen aus einem Innenzahn zum Antrieb (36) und einem Außenzahn zur Positionierung (37) gebildet ist.

10. Förderer mit einer Arretiervorrichtung nach dem Anspruch 8 oder 9,
dadurch **gekennzeichnet,**
daß der Antriebezahn (36) eine Form hat, die komplementär zu der der Vertiefungen des verzahnten Elements (15) ist.

11. Förderer mit einer Arretiervorrichtung nach dem Anspruch 8 oder 9,
dadurch **gekennzeichnet,**
daß der Positionierzahn (37) eine allgemein abgerundete Form und eine geringere Länge im Umfangssinn als der Antriebszahn (36) hat.

12. Förderer mit einer Arretiervorrichtung nach einem der Ansprüche 8 oder 9,
dadurch **gekennzeichnet,**
daß wenn die Verzahnung (35) des Lastenträgers (11) mit dem verzahnten Element (15) in Eingriff steht, allein der Antriebszahn (36) in Kontakt mit einer der Vertiefungen des verzahnten Elements (15) steht.

13. Förderer mit einer Arretiervorrichtung nach dem Anspruch 1,
dadurch **gekennzeichnet,**
daß das Erfassungs- und Arretierorgan (46) das Vorhandensein eines Lastenträgers (11) in dem Übergangsbereich erfaßt und einen Arretierbefehl an den Hilfsmotor (21) überträgt, so daß die Drehbewegung des verzahnten Elements (15) und des Lastenträgers (11), mit dem es in einer bestimmten Position in dem Übergangsbereich in Eingriff steht, blockiert wird.

14. Förderer mit einer Arretiervorrichtung nach dem Anspruch 1,
dadurch **gekennzeichnet,**
daß er weiterhin ein Freigabeorgan für den Lastträger hat, das auf den Hilfsmotor (21) so einwirkt, daß es die Drehbewegung von diesem in Synchronisation mit dem Antriebsmotor (26) zuläßt.

15. Stauförderer der Art mit einer Arretiervorrichtung nach irgendeinem der Ansprüche 1 bis 14,
dadurch **gekennzeichnet,**
daß er in Kombination mit der Arretiervorrichtung eine Mehrzahl von Lastenträgern (11) aufweist, die mittels eines Antriebsmotors (26) entlang einer bestimmten Bahn entlang des Förderers bewegbar sind, wobei die Bahn wenigstens einen ansteigenden und / oder abfallenden Übergangsbereich, wenigstens eine Verankerungsvorrichtung (47) und wenigstens einen Drehmomentbegrenzer (55, 55') aufweist.

16. Lastenträger für einen Stauförderer, der mittels eines Antriebsmotors (26) entlang eines bestimmten Weges entlang des Förderers bewegbar ist, wobei der Weg wenigstens einen ansteigenden und / oder abfallenden Übergangsbereich aufweist,
dadurch **gekennzeichnet,**
daß er an seiner Innenfläche (30) getragen eine Verzahnung (35) aufweist, die mit einem verzahnten Element (15) in Eingriff bringbar ist, das die Arretierung der Lastenträger befiehlt, wobei das verzahnte Element (15) an seinem gesamten Umfang gleichmäßig verteilt eine Folge von Zähnen (40) aufweist, wobei jeder dieser Zähne zwei geneigte Flächen (41, 42) aufweist, deren abgerundeter Spitzenwinkel 90° beträgt, daß die Verzahnung (35) wenigstens zwei Zahngruppen besitzt, die unterschiedliche Formen und Abmessungen haben und so ausgebildet sind, daß allein die Verzahnung eine der Gruppen (36) während des Eingriffs in Kontakt mit einer Vertiefung der Verzahnung des verzahnten Elements (15) kommen kann, während die Verzahnung der anderen Gruppe (37) von einem Teil zum anderen der Spitze eines Zahns des Elements (15) gleitet.

17. Lastenträger nach Anspruch 16,
dadurch **gekennzeichnet,**
daß die Verzahnung (35) gemäß einem der Ansprüche 8 bis 12 ausgebildet ist.

18. Lastenträgerzug nach Anspruch 16 oder 17,
dadurch **gekennzeichnet,**
daß die Lastenträger untereinander gelenkig durch eine Zugstange verbunden sind.

19. Lastenträgerzug nach dem Anspruch 18,
dadurch **gekennzeichnet,**
daß die Verzahnung (35) wenigstens zwei Zahngruppen, die unterschiedliche Formen und Abmessungen besitzen und so ausgebildet sind, daß allein die Zähne einer dieser Gruppen von Zähnen zum Antrieb in eine Vertiefung der Verzahnung des verzahnten Elements (15) während des Eingriffs eingreifen kann, während die Zähne der anderen Gruppe (37) von Positionierzähnen von einem Teil der Spitze eines Zahns des Elements (15) zum anderen gleitet.

20. Lastenträgerzug nach dem Anspruch 19 oder 20,
dadurch **gekennzeichnet,**
daß die Lastenträger jeweils wenigstens ein Paar von Schuhen (31) an dem Kopfende und wenigstens ein Paar von Schuhen (31) an dem hinteren Schwanzende aufweisen, wobei wenigstens ein Paar der Paare von Schuhen Zähne trägt, die wenigstens der Antriebsfunktion entsprechen.

21. Lastenträgerzug nach dem Anspruch 20,
dadurch **gekennzeichnet,**
daß das Paar von Kopfschuhen und das Paar von Schwanzschuhen gemäß einer Variante miteinander durch ein Stück (C) verbunden sind, das hauptsächlich eine dem Profil der Antriebszähne (36) entsprechende Verzahnung beginnend an den Kopfschuhen und eine dem Profil der Positionierzähne (37) entsprechende Verzahnung neben den Schuhen am hinteren Ende aufweist.

22. Getriebezug nach dem Anspruch 20,
dadurch **gekennzeichnet,**
daß jeder der Lastenträger wenigstens ein Paar von Kopfschuhen, deren Verzahnung (36) der Antriebsfunktion entspricht, und wenigstens ein Paar von Schwanzschuhen, deren der Positionierfunktion entsprechende Verzahnung (37) durch eine Kuppellasche (B) getragen ist, die einerseits an einem der Schwanzschuhe eines Lastenträgers und andererseits an dem entsprechenden Kopfschuh des nachfolgenden Lastenträgers angelenkt ist, wodurch der Lastenträgerzug gebildet wird, aufweist.

23. Lastenträgerzug nach dem Anspruch 20,
dadurch **gekennzeichnet,**
daß zwei Lastenträger miteinander durch einen Zwischenlastenträger (11a) verbunden sind, dessen Kopf- und Schwanzschuhe keine Verzahnung aufweisen, sondern als Anlenkungspunkte für Verbindungsglieder (B-Ba) zwischen den Kopf- und Schwanzlastträgern, an denen der Zwischenlastenträger angebracht ist, dienen, wobei die Verbindungsglieder über ihre Länge hauptsächlich Antriebszähne (36) und benachbart von den Anlenkungspunkten Positionierzähne (37) aufweisen.
